# EUROPÄISCHE PATENTSCHRIFT

(11) **EP 2 864 111 B1**
(45) Veröffentlichungstag und Bekanntmachung des Hinweises auf die Patenterteilung: **25.10.2017**
(21) Anmeldenummer: 13729602.6
(22) Anmeldetag: 12.06.2013
(51) Int. Cl.: B29D 23/00

(54) **VERFAHREN UND VORRICHTUNG ZUR HERSTELLUNG EINES MINDESTENS EINE QUERVERSTÄRKUNG AUFWEISENDEN HOHLEN KUNSTSTOFFGEGENSTANDS**
METHOD AND DEVICE FOR PRODUCING A HOLLOW PLASTIC OBJECT HAVING AT LEAST ONE TRANSVERSE REINFORCEMENT
PROCÉDÉ ET DISPOSITIF POUR LA FABRICATION D'UN OBJET CREUX EN MATÉRIAU SYNTHÉTIQUE PRÉSENTANT AU MOINS UN RENFORCEMENT TRANSVERSAL

(30) Priorität: 20.06.2012 DE 102012012126; 18.09.2012 DE 102012018429
(43) Veröffentlichungstag der Anmeldung: 29.04.2015
(73) Patentinhaber: Thomas GmbH + Co. Technik + Innovation KG, 27432 Bremervörde (DE)
(72) Erfinder: JANSEN, Klaus, 21614 Buxtehude (DE)
(74) Vertreter: Möller, Friedrich
(86) Internationale Anmeldenummer: PCT/EP2013/001719
(87) Internationale Veröffentlichungsnummer: WO 2013/189576

(56) Entgegenhaltungen:
- EP-A1- 0 211 535
- JP-A- S5 949 954
- US-A- 5 820 804

## Beschreibung

Die Erfindung betrifft ein Verfahren zur Herstellung eines mindestens eine Querverstärkung aufweisenden hohlen Kunststoffgegenstands gemäß dem Oberbegriff des Anspruchs 1. Des Weiteren betrifft die Erfindung eine Vorrichtung zur Herstellung eines mindestens eine Querverstärkung aufweisenden hohlen Kunststoffgegenstands gemäß dem Oberbegriff des Anspruchs 11.

Aus EP 0 211 535 A1 und US 5,820,804 ist beispielsweise bekannt, dass zur Herstellung hohler Kunststoffgegenstände ein Kern erforderlich ist. Ein solcher Kern wird bislang vor der Form gehalten. Wenn das Kunststoffprofil mindestens eine Querverstärkung aus hochzugfesten geflochtenen, gewirkten oder sonst wie verknüpften Glas- oder Kohlefasern aufweist, ist es aufgrund des vor der Form gehaltenen Kerns nicht möglich, eine solche Querverstärkung als vorgefertigten, geschlossenen Schlauch über den Kern zu ziehen. Die Querverstärkung muss dann zwischen der Form und der Stelle, an der der Kern vor der Form gehalten ist, um den Kern herum hergestellt werden. Solche Querverstärkungen lassen sich nur in begrenzter Länge um den Kern herum bilden, was eine kontinuierliche Herstellung längerer hohler Kunststoffgegenstände mit mindestens einer Querverstärkung nicht zulässt. Außerdem ist die Bildung der Querverstärkung um den Kern herum aufwendiger als ein nach Art eines Halbzeugs vorgefertigter Verstärkungsschlauch.

Hiervon ausgehend liegt der Erfindung die Aufgabe zugrunde, ein Verfahren und eine Vorrichtung zur einfachen Herstellung eines mindestens eine Querverstärkung aufweisenden hohlen Kunststoffgegenstands zu schaffen.

Ein Verfahren zur Lösung der eingangs genannten Aufgabe weist die Maßnahmen des Anspruchs 1 auf. Hiernach ist es vorgesehen, die Form und den Kern gemeinsam periodisch relativ zum herzustellenden Kunststoffgegenstand zu bewegen. Es wird so phasenweise das herzustellende Kunststoffprofil aus der Form und über den Kern bewegt.

Bevorzugt ist es vorgesehen, dass die Form mit dem Kern gemeinsam schrittweise vor- und zurückbewegt werden, und zwar insbesondere abwechselnd in und gegen die Herstellungsrichtung. Beim Vorbewegen in Herstellungsrichtung wird zusammen mit der Form und dem Kern der herzustellende Kunststoffgegenstand bzw. das Kunststoffprofil vorbewegt, während beim Zurückbewegen gegen die Herstellungsrichtung die Form und der Kern relativ zum vorzugsweise stillstehenden Kunststoffgegenstand bewegt werden, wodurch ein Stück des frisch hergestellten Kunststoffgegenstands mit einem vornliegenden Ende aus der Form austritt und über den Kern rutscht.

Bei einer bevorzugten Ausgestaltung der Erfindung wird der Kern mindestens an seinem in Herstellungsrichtung gesehen hinter der Form liegenden Ende gehalten. Dadurch wird der Kern auf Zug belastet, wenn relativ zum stillstehenden Kunststoffprofil der Kern und die Form zur Entfernung eines neuen Abschnitts des herzustellenden Kunststoffgegenstands gegen die Herstellungsrichtung zurückbewegt werden. Bevorzugt wird zu diesem Zweck beim Zurückbewegen der Form und des Kerns der Kunststoffgegenstand hinter der Form festgehalten, weil der Kunststoffgegenstand durch die Form und über den Kern rutschen muss.

Darüber hinaus kann es außerdem vorgesehen sein, dass der Kern mindestens an einem sich in Herstellungsrichtung gesehen hinter der Form befindenden Endbereich gehalten wird. Dadurch wird sozusagen die Fixierung des Kerns umgekehrt, wodurch vor der Form kein störender Kernhalter erforderlich ist und dadurch die Querverstärkung als vorgefertigter Verstärkungsschlauch (Halbzeug) auf das vor der Form liegende Ende des Kerns aufgezogen werden kann.

Bevorzugt ist es vorgesehen, den Kern entweder mechanisch zu halten, insbesondere abzustützen, oder berührungslos zu halten.

Wird der Kern mechanisch gehalten bzw. abgestützt, geschieht dies an seinem sich in Herstellungsrichtung gesehen hinter der Form befindenden Endbereich durch mindestens einen Kernhalter. Ein mechanisches Halten des sich vor der Form befindlichen Anfangsbereich des Kerns durch beispielsweise einen Kernhalter ist dann nicht mehr erforderlich, so dass beispielsweise ein als Halbzeug vorgefertigter Verstärkungsschlauch über den vor der Form freiliegenden Anfangsbereich des Kerns geschoben werden kann.

Wird der Kern von mindestens einem Kernhalter berührungslos gehalten, was bevorzugt magnetisch erfolgt, ist eine direkte mechanische Verbindung zwischen dem Kernhalter und dem Kern nicht erforderlich. Dann kann ein solcher berührungsloser Kernhalter hinter der Form und/oder vor der Form sich befinden. Bevorzugt ist ein berührungsloser, insbesondere magnetisch arbeitender, Kernhalter sowohl vor als auch nach der Form vorgesehen. Weil solche berührungslosen Kernhalter nicht unmittelbar den Kern berühren, verhindern sie nicht das Aufziehen eines vorgefertigten Verstärkungsschlauchs auf den vorderen Endbereich des Kerns vor der Form, auch wenn ein berührungsloser Kernhalter sich vor der Form befindet.

Nach einer bevorzugten Weiterbildung des Verfahrens ist es vorgesehen, das Kunststoffprofil hinter der Form phasenweise von mindestens einem Greifer zu halten. Das fertige Kunststoffprofil kann dadurch über den Kern gezogen werden. Wenn der Kern mechanisch an seinem sich hinter der Form befindenden Bereich gehalten wird, befindet sich der mindestens eine Greifer vorzugsweise zwischen dem Kernhalter und der Form. Bei berührungslosen Kernhaltern kann der mindestens eine Greifer in Fertigungsrichtung gesehen hinter dem auf die Form folgenden, insbesondere magnetischen Kernhalter angeordnet sein.

Eine vorteilhafte alternative Ausgestaltung des Verfahrens sieht es vor, dass der Kunststoffgegenstand hinter der Form von mindestens einem verfahrbaren Greifer durch die Form und über den Kern gezogen wird. Diese Ausgestaltung des Verfahrens lässt eine stationäre Anordnung der Form und des Kerns zu. Vor allem brauchen bei dieser Variante der Erfindung der Kern und die Form nicht periodisch hin- und herbewegt zu werden.

Bevorzugt ist es vorgesehen, dass der mindestens eine verfahrbare Greifer den Kunststoffgegenstand kontinuierlich über den Kern und durch die Form zieht. Das vereinfacht den Verfahrensablauf und kann sich vorteilhaft auf die Qualität des herzustellenden Kunststoffgegenstands auswerten.

Eine Vorrichtung zur Lösung der eingangs genannten Aufgabe weist die Merkmale des Anspruchs 11 auf. Bei dieser Vorrichtung sind die Form und der Kern einem gemeinsamen Schlitten zugeordnet. Der Schlitten ist bevorzugt verfahrbar. Dadurch, dass nicht nur die Form, sondern auch der Kern dem Schlitten zugeordnet sind, können beide zur Formgebung des hohlen Kunststoffgegenstands, insbesondere eines rohrförmigen Kunststoffprofils oder eines Kunststoffrohrs, beteiligten Komponenten, nämlich Form und Kern, zusammen mit dem Kunststoffgegenstand oder auch relativ zu demselben verfahren werden.

Bevorzugt ist es vorgesehen, dem Schlitten auch mindestens einen Kernhalter zuzuordnen. Der auf dem Schlitten befestigte Kernhalter schafft eine Verbindung zum vorzugsweise verfahrbaren Schlitten, wodurch die Verfahrbewegung des Schlittens vom Kernhalter auf den von diesem gehaltenen Kern übertragen wird.

Nach einer bevorzugten Ausgestaltung der Vorrichtung ist der Schlitten in und gegen die Herstellungsrichtung des Kunststoffgegenstands verfahrbar. Dadurch sind die Form und der Kern, letzterer aufgrund seiner Verbindung mit dem Kernhalter, vom Schlitten in und gegen die Herstellungsrichtung des Kunststoffgegenstands verfahrbar. Durch diese Verfahrbarkeit kommt es zur schrittweisen Herstellung des Kunststoffprofils.

Ein weiteres Ausführungsbeispiel der erfindungsgemäßen Vorrichtung kann es vorsehen, dass der Kern von mindestens einem hinter der Form angeordneten Kernhalter lösbar gehalten ist. Durch das Halten des Kerns hinter der Form ist die Möglichkeit geschaffen, vor der Form einen als Halbzeug dienenden, vorgefertigten Verstärkungsschlauch zur Bildung der Querverstärkung auf den Kern zu schieben.

Dadurch, dass gegebenenfalls, nämlich vorzugsweise, der in Fertigungsrichtung gesehen hinter der Form angeordnete Kernhalter vom Kern lösbar ist, kann der hergestellte Kunststoffgegenstand abschnittsweise über das hinter der Form liegende Ende des Kerns geschoben und dabei vom Kern befreit werden.

Die Kernhalter können auf verschiedene Weise ausgebildet sein. Bevorzugt sind sie zum mechanischen, klemmenden Halten des Kerns oder zum berührungslosen Halten des Kerns ausgebildet. Aber auch andere Ausgestaltungen des Kernhalters sind denkbar. Erfolgt das Halten des Kerns mechanisch, wird dieses nur am hinter der Form liegenden Endbereich des Kerns vorgenommen. Vom mechanischen Kernhalter wird dann der Endbereich oder das Ende des Kerns hinter der Form mechanisch ergriffen und dadurch abgestützt. Der vor der Form liegende Anfangsbereich des Kerns kann dann frei bleiben zum Aufschieben eines halbzeugartigen Verstärkungsschlauchs für die Querverstärkung. Bei der berührungslosen Fixierung bzw. Abstützung des Kerns kann das am hinter der Form liegenden Endbereich des Kerns erfolgen, aber auch alternativ oder zusätzlich vor der Form, weil das berührungslose Abstützen des Kerns ein Aufschieben des Verstärkungsschlauchs für die Querverstärkung auf den vor der Form liegenden Anfangsbereich des Kerns zulässt.

Bevorzugte Ausführungsbeispiele der Erfindung werden nachfolgend anhand der Zeichnung näher erläutert. In dieser zeigen:
- Fig. 1: eine schematische Darstellung einer Vorrichtung im vertikalen Längsschnitt,
- Fig. 2: die Vorrichtung in einer Darstellung analog zur Fig. 1 bei einem zweiten Verfahrensschritt,
- Fig. 3: die Vorrichtung in einer Darstellung analog zur Fig. 1 in einem dritten Verfahrensschritt,
- Fig. 4: die Vorrichtung in einer Darstellung analog zur Fig. 1 in einem vierten Verfahrensschritt,
- Fig. 5: die Vorrichtung in einer Darstellung analog zur Fig. 1 in einem fünften Verfahrensschritt, und
- Fig. 6: eine Vorrichtung nach einem zweiten Ausführungsbeispiel der Erfindung in einer Darstellung analog zur Fig. 1.

Die gezeigten Vorrichtungen dienen zur Herstellung eines hohlen verstärkten Kunststoffgegenstands 10. Der Kunststoffgegenstand 10, wobei es sich bevorzugt um ein rohrförmiges verstärktes Kunststoffprofil oder ein verstärktes Kunststoffrohr handelt, ist in den Figuren nur schematisch dargestellt. Es geht bei der Erfindung im Besonderen um einen Kunststoffgegenstand 10 mit mindestens einer Querverstärkung 11. Im gezeigten Ausführungsbeispiel verfügt der Kunststoffgegenstand 10 auch noch über Längsverstärkungen 12. Die Erfindung eignet sich aber auch für Kunststoffgegenstände 10, die nur mindestens eine Querverstärkung 11 aufweisen, aber über keine Längsverstärkung 12 verfügen. Bei der Querverstärkung 11 handelt es sich bevorzugt um einen als Halbzeug vorgefertigten Verstärkungsschlauch.

Die Vorrichtung zur Herstellung des Kunststoffgegenstands 10 weist eine Form 13 und einen länglichen Kern 14 auf. Sowohl die Form 13 als auch der Kern 14 können über beliebige Querschnitte verfügen. Dadurch sind hohle Kunststoffgegenstände 10 mit beliebigen Profilen herstellbar, indem die Form 13 den äußeren Querschnitt des Kunststoffgegenstands 10 bildet und der Kern 14 den inneren Querschnitt.

Der längliche Kern 14 verfügt über ein vorderes Ende 15 und ein hinteres Ende 16. Das vordere Ende 15 befindet sich in Herstellungsrichtung 17 des Kunststoffgegenstands 10 gesehen vor der Form 13, während das hintere Ende 16 des Kerns 14 in Herstellungsrichtung 17 gesehen sich hinter der Form 13 befindet, also mit Abstand vor derjenigen Seite der Form 13, aus der der hergestellte hohle Kunststoffgegenstand 10 austritt.

Der längliche Kern 14 ist im gezeigten Ausführungsbeispiel hinter der Form 13 mit einer verringerten Abmessung versehen, nämlich kleiner bzw. verjüngt. Dadurch liegt der Kern 14 nur im Bereich der Form 13 oder auch etwas darüber hinaus an der Innenseite des hohlen Kunststoffgegenstands 10 an. Wenn demnach der Kunststoffgegenstand 10 die Form 13 verlässt, wird er außen nicht mehr von der Form 13 abgestützt und auch innen nicht mehr vom Kern 14 gehalten bzw. mitgeformt. Denkbar ist es aber, den an der Formgebung des inneren Profils des Kunststoffgegenstands 10 beteiligten Formgebungsbereich 18 des Kerns 14 länger als die Form 13 auszubilden oder den Kern 14 in Abweichung von den Darstellungen in den Figuren hinter der Form 13 überhaupt nicht einzuschnüren, so dass der Kern 14 über seine ganze Länge einen gleichen Querschnitt aufweist.

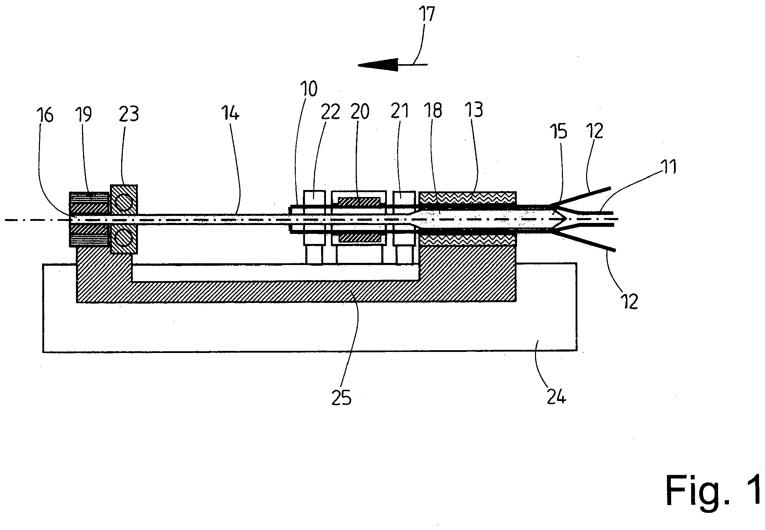

Bei dem in den Fig. 1 bis 5 gezeigten Ausführungsbeispiel der Vorrichtung ist der Kern 14 nur an einem in Herstellungsrichtung 17 gesehen auf die Form 13 folgenden hinteren Ende 16 von einem Kernhalter 19 mechanisch gehalten. Der Kernhalter 19 ist aber so ausgebildet, dass er vom hinteren Ende 16 des Kerns 14 gelöst werden kann, so dass zwischen dem Kern 14 und dem geöffneten Kernhalter 19 ein Abschnitt des fertig gestellten hohlen Kunststoffgegenstands 10 über das hintere Ende 16 des Kerns 14 geschoben werden kann. Das in Herstellungsrichtung 17 vor der Form 13 liegende vordere Ende 15 des Kerns 14 bleibt aufgrund der Anordnung des Kernhalters 19 am hinteren Ende 16 des Kerns 14 frei. Dadurch kann der eine Querverstärkung 11 bildende Verstärkungsschlauch über das vor der Form 13 liegende vordere Ende 15 vor der Form 13 auf den Kern 14 aufgeschoben bzw. aufgezogen werden.

Die Vorrichtung der Fig. 1 bis 5 verfügt über einen in Herstellungsrichtung 17 gesehen hinter der Form 13 angeordneten oder mit anderen Worten auf die Form 13 folgenden Greifer 20. Gegebenenfalls kann die Vorrichtung auch über mehrere in Herstellungsrichtung 17 mit Abstand oder auch unmittelbar aufeinanderfolgende Greifer 20 verfügen. Der in den Figuren gezeigte einzige Greifer 20 dient dazu, den Kunststoffgegenstand 10 temporär zu erfassen, und zwar außenseitig. Der Greifer 20 kann dadurch den Kunststoffgegenstand 10 von der Außenseite erfassen. Der Greifer 20 ist so ausgebildet, dass er sich öffnen lässt, so dass er wahlweise den Kunststoffgegenstand 10 von außen erfasst und dadurch hält bzw. festklemmt oder vom Kunststoffgegenstand 10 gelöst wird, so dass keine Verbindung zwischen dem Kunststoffgegenstand 10 und dem Greifer 20 mehr vorhanden ist.

Bei der hier gezeigten Vorrichtung ist hinter der Form 13 eine Kühleinrichtung 21 vorgesehen. Eine solche Kühleinrichtung 21 ist nicht zwingend erforderlich. Es sind Vorrichtungen ohne eine Kühleinrichtung 21 denkbar.

Die Vorrichtung verfügt weiterhin über eine Trenneinrichtung 22, beispielsweise eine Säge, die vom vorzugsweise kontinuierlich hergestellten Kunststoffgegenstand 10 einen Abschnitt mit der gewünschten Länge abtrennt. Die Trenneinrichtung 22 ist in Herstellungsrichtung 17 dem Greifer 20 nachgeordnet. Mit der Trenneinrichtung 22 kooperiert eine Abzugseinrichtung 23 zum Abtransport des vom als fortlaufenden Strang hergestellten Kunststoffgegenstand 10 von der Trenneinrichtung 22 abgetrennten Abschnitts desselben. Im gezeigten Ausführungsbeispiel ist die Abzugseinrichtung 23 dicht vor dem Kernhalter 19 angeordnet. Die Abzugseinrichtung 23 kann sich so auch an einer anderen Stelle befinden. Auch ist es denkbar, mehrere aufeinanderfolgende Abzugseinrichtungen 23 vorzusehen.

Bei der in der Fig. 1 bis 5 gezeigten Vorrichtung sind die Form 13 und der Kern 14 gemeinsam in und gegen die Herstellungsrichtung 17 periodisch hin- und herbewegbar durch einen verfahrbar am Maschinengestell 24 gelagerten Schlitten 25. Dazu sind die Form 13 und der Kernhalter 19 mit dem Schlitten 25 verbunden. Wenn der Schlitten 25 längs der Herstellungsrichtung 17 auf dem Maschinengestell 24 verfahren wird, werden zusammen und im gleichen Maße die Form 13 und der Kern 14 mit dem Kernhalter 19 verfahren.

Bei der hier gezeigten Vorrichtung ist auch die Abzugseinrichtung 23 am Schlitten 25 gelagert und somit auch vom Schlitten 25 verfahrbar.

Bei der Vorrichtung der Fig. 1 bis 5 ist der Greifer 20 stationär am Maschinengestell 24 gelagert. Im Gegensatz zur Form 13, dem Kern 14 und dem Kernhalter 19 ist somit der Greifer 20 beim gezeigten Ausführungsbeispiel nicht längs der Herstellungsrichtung 17 verfahrbar. Unverfahrbar mit dem Maschinengestell 24 verbunden sind bei der gezeigten Vorrichtung auch die gegebenenfalls vorhandene Kühleinrichtung 21 sowie die Trenneinrichtung 22.

Nachfolgend wird das erfindungsgemäße Verfahren anhand der Vorrichtung der Fig. 1 bis 5 näher beschrieben:
Bei in den genannten Figuren erläuterten Verfahren wird der mindestens die Querverstärkung 11 aufweisende hohle Kunststoffgegenstand 10 als rohrartiges Kunststoffprofil oder Kunststoffrohr schrittweise hergestellt, indem nach und nach stets etwa maximal der Länge der Form 13 in Herstellungsrichtung 17 entsprechende Abschnitte des fertiggestellten Kunststoffgegenstands 10 in Herstellungsrichtung 17 aus der Form 13 und über den Kern 14 gezogen werden. Bei diesem Verfahren wird der Kunststoffgegenstand 10 so quasi im Pilgerschrittverfahren hergestellt.

Die mindestens eine vorzugsweise als Halbzeug vorgefertigte Querverstärkung 11 aus geflochtenen, gewebten oder gewirkten Fasern vorzugsweise hoher Zugfestigkeit wird als Verstärkungsschlauch über das unabgestützte, freiliegende vordere Ende 15 auf den Kern 14 gezogen. Außerdem werden im Bereich des vorderen, freien Endes 15 des Kerns 14 die Längsverstärkungen 12 zugeführt. In der beheizten Form 13 wird flüssiger Kunststoff, bei der Pultrusion vorzugsweise ein duroplastischer Kunststoff, der Form 13 zugeführt und in der Form 13 die mindestens eine Querverstärkung 11 sowie die Längsverstärkung 12 in der Kunststoffmatrix eingebettet. Alternativ ist es auch denkbar, die mindestens eine Querverstärkung 11 und/oder die Längsverstärkungen 12 vor der Form 13, das heißt vor Eintritt in dieselbe, mit Kunststoff zu tränken. Das kann in einem Bad oder einer Tränkeeinheit geschehen, wobei der Kunststoff ein Thermoplast oder ein Duroplast sein kann. Außerdem ist es denkbar, die mindestens eine Querverstärkung 11 und/oder die Längsverstärkungen 12 mit festem Kunststoff, vorzugsweise einem Thermoplast, zu versehen, was somit als fester Bestandteil der Verstärkungen als sogenanntes comingled oder cowoven material der Form 13 zugeführt wird und dann in derselben aufschmilzt bzw. aufgeschmolzen wird.

Aus der Form 13 tritt in Herstellungsrichtung 17 der fertige Kunststoffgegenstand 10 aus. Beim Austritt aus der Form 13 verjüngt sich der Kern 14, so dass die Formgebung des Innenquerschnitts des Kunststoffgegenstands 10 durch den Kern 14 hinter der Form 13 aufgehoben wird. Der Kunststoffgegenstand 10 ist beim Verlassen der Form 13 so weit ausgehärtet, dass er seine Gestalt, und zwar den äußeren und den inneren Querschnitt, beibehält. Der Kunststoffgegenstand 10 weist aber noch eine verhältnismäßig hohe Temperatur auf, die durch die auf die Form 13 folgende Kühleinrichtung 21 abgesenkt wird bis auf etwa Raumtemperatur.

Bei der Herstellung des Kunststoffgegenstands 10 ist das hinter der Form 13 liegende hintere Ende 16 des Kerns 14 abgestützt vom Kernhalter 19.

Die Fig. 1 zeigt bereits einen teilweise fertiggestellten Kunststoffgegenstand 10, der die Form 13 verlassen hat und sich durch die Kühleinrichtung 21, den Greifer 20 und die Trenneinrichtung 22 erstreckt. Ausgehend von der Fig. 1 werden schrittweise weitere Abschnitte des Kunststoffgegenstands 10 hergestellt, so dass seine Länge nach und nach zunimmt.

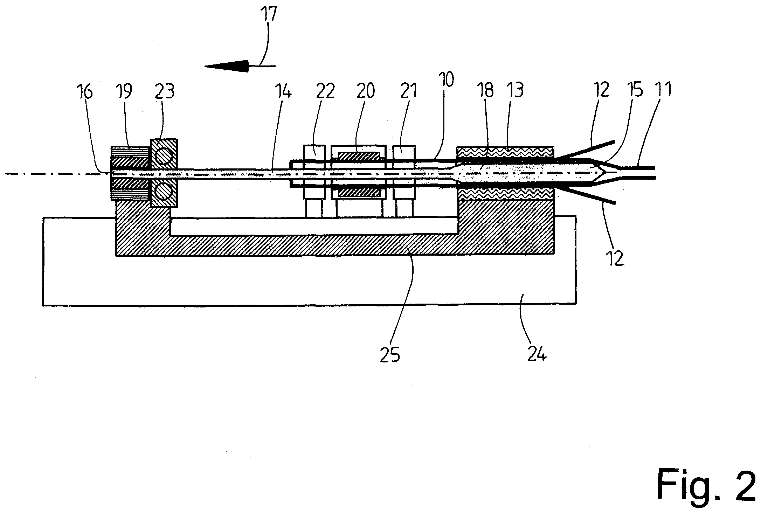

Die Fig. 2 zeigt einen sich an die Darstellung der Fig. 1 anschließenden Herstellungsschritt des Kunststoffgegenstands 10, bei dem der Schlitten 25 mit der Form 13, dem Kern 14, dem Kernhalter 19 und der Abzugseinrichtung 23 gegenüber dem Maschinengestell 24 gegen die Herstellungsrichtung 17 längs derselben um eine Strecke zurückgefahren ist. Diese Strecke entspricht dem bei jedem Verfahrenszyklus neu hergestellten Abschnitt des Kunststoffgegenstands 10. Hierbei entfernt sich die Form 13 vom Greifer 20, der Kühleinrichtung 21 und der Trenneinrichtung 22. Beim Zurückfahren der Form 13 mit dem Kern 14 entgegen der Herstellungsrichtung 17 hält der Greifer 20 einen kurzen Bereich des sich bereits außerhalb der Form 13 befindenden Kunststoffgegenstands 10 fest. Auf diese Weise wird beim Zurückfahren des Schlittens 25 mit der Form 13 und dem Kern 14 gegen die Herstellungsrichtung 17 ein Stück des Kunststoffgegenstands 10 aus der Form 13 heraugezogen und in gleichem Maße der Kern 14 im oberen Kunststoffgegenstand 10 zurückbewegt. Hierbei kommt es während des Zurückbewegens der Form 13 und des Kerns 14 gegen die Herstellungsrichtung 17 zu einer Relativbewegung der Form 13 und des Kerns 14 zum vom stillstehenden Greifer 20 gehaltenen Kunststoffgegenstand 10.

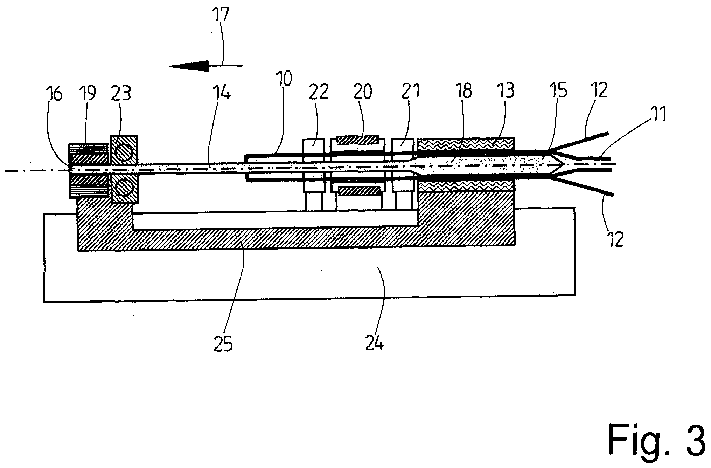

Im in der Fig. 3 gezeigten zweiten Schritt werden nach dem Öffnen des Greifers 20 und während des geöffneten Greifers 20 die Form 13 und der Kern 14 zusammen mit dem Kernhalter 19 wieder in Herstellungsrichtung 17 vorbewegt, und zwar um den gleichen Weg, um den zuvor vom Schlitten 25 die Form 13 und der Kern 14 mit dem Kernhalter 19 gegenüber dem Maschinengestell 24 zurückbewegt worden sind. Bei dieser Vorwärtsbewegung der Form 13 und des Kerns 14 findet keine Relativbewegung der Form 13 und des Kerns 14 zum Kunststoffgegenstand 10 statt. Deswegen wird der Kunststoffgegenstand 10 bei der Vorwärtsbewegung der Form 13 und des Kerns 14 in Herstellungsrichtung 17 mitgenommen. Nach dem Vorwärtsbewegen der Form 13 und des Kerns 14 mit dem Kunststoffgegenstand 10 befindet sich die Vorrichtung wieder in der Ausgangsstellung der Fig. 1. Nur hat sich die aus der Form 13 herausragende Länge des Kunststoffgegenstands 10 vergrößert, und zwar um einen solchen Abschnitt, um den die Form 13 mit dem Kern 14 zunächst gegen die Herstellungsrichtung 17 zurückgefahren und anschließend um den gleichen Weg wieder vorgefahren ist. Ein Vergleich der Fig. 1 bis 3 verdeutlicht die bei jedem Zyklus gemäß den Fig. 1 bis 3 wachsende Länge des Kunststoffgegenstands 10.

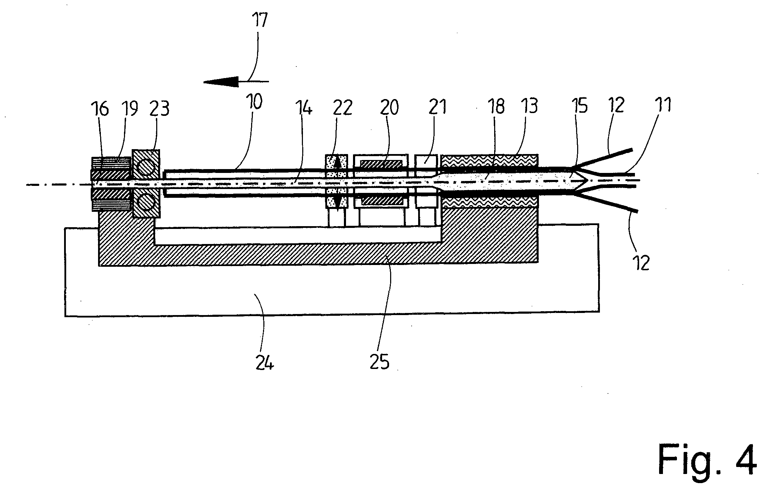

Die Fig. 4 verdeutlicht das Abtrennen eines Abschnitts des fertigen hohlen Kunststoffgegenstands 10 vom durch mehrere aufeinanderfolgende Zyklen der Fig. 1 bis 3 hergestellten Strang des hohlen Kunststoffgegenstands 10. Demnach wird der Kunststoffgegenstand 10 unmittelbar hinter dem Greifer 20 vom sich noch im Bereich des Greifers 20 befindlichen Kunststoffgegenstand 10 abgetrennt bzw. abgesägt. Dabei kann der in Herstellungsrichtung 17 vor der Trenneinrichtung 22 sich befindende Abschnitt des hohlen Kunststoffgegenstands 10 an seinem zur Trenneinrichtung 22 weisenden Ende vom Greifer 20 gehalten und so fixiert sein.

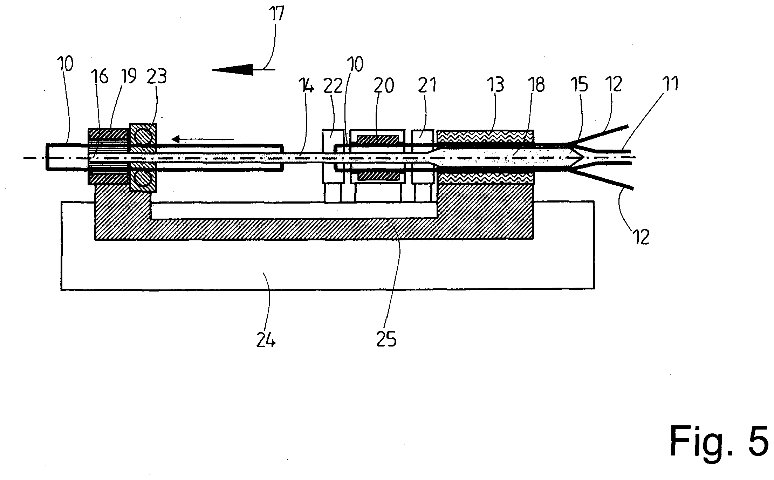

Nachdem der eine gewünschte Länge aufweisende Abschnitt des Kunststoffgegenstands 10 von der Trenneinrichtung 22 vom fortlaufenden Strang des Kunststoffgegenstands 10 abgetrennt worden ist, wird der abgeschnittene Abschnitt des Kunststoffgegenstands 10 mittels der Abzugseinrichtung 23 vom Kern 14 über sein hinteres Ende 16 in Herstellungsrichtung 17 abgezogen. Damit der Kunststoffgegenstand 10 vom Kern 14 abgezogen werden kann, ist der Kernhalter 19 während dieses Abtransportvorgangs ausreichend weit geöffnet, so dass der abgetrennte Abschnitt des Kunststoffgegenstands 10 durch den Kernhalter 19 hindurch über das hintere Ende 16 des Kerns 14 abtransportiert werden kann (Fig. 5). Anschließend wird der Kernhalter 19 wieder geschlossen und dadurch das hintere Ende 16 des Kerns 14 wieder vom Kernhalter 19 festgehalten.

Es ist eine Weiterbildung des Verfahrens denkbar, bei der durch eine dynamische berührungslose Positionierung des Kerns 14 zur Form 13 durch insbesondre Magnetfelder der Kern 14 zusätzlich vor allem radial zur Form 13 positionierbar bzw. zentrierbar ist.

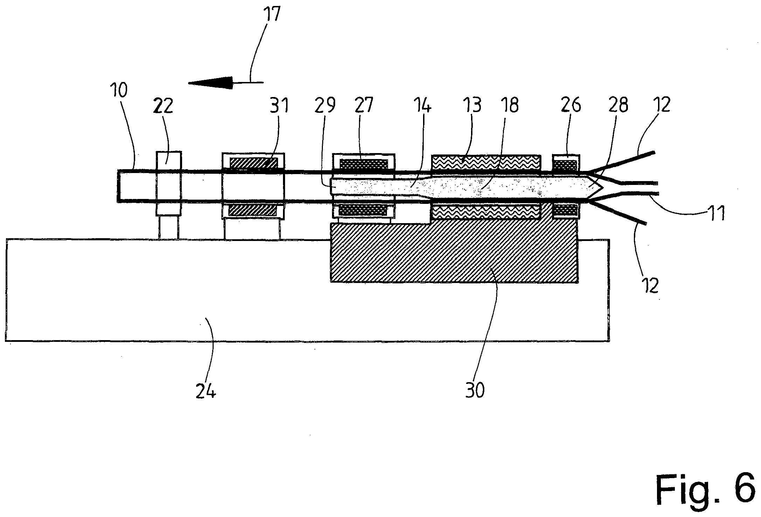

Die Fig. 6 zeigt ein zweites Ausführungsbeispiel der Vorrichtung. Diese Vorrichtung verfügt über zwei berührungslose Kernhalter 26 und 27, und zwar jeweils einen Kernhalter 26 vor der Form 13 und einen Kernhalter 27 hinter der Form 13. Durch die berührungslosen Kernhalter 26 und 27 wird der Kern am vor der Form 13 liegenden vorderen Ende 28 und am hinter der Form 13 liegenden hinteren Ende 29 schwebend gehalten. Alternativ ist es denkbar, wie beim ersten Ausführungsbeispiel nur hinter der Form 13 einen berührungslosen Kernhalter 27 zum schwebenden Halten des Kerns 14 vorzusehen. Bevorzugt wird der Kern von den Kernhaltern 26 und 27 magnetisch in einem geschlossenen Magnetfeld gehalten. Dabei stellt der Kern 14 quasi den Läufer eines Linearmotors dar, der im statischen Haltebetrieb betrieben wird. Bevorzugt sind die Magnetfelder zur Feinpositionierung des Kerns 14 in der Form 13 regelbar. Dadurch ist eine Konstanz der Wandstärken des herzustellenden hohlen Kunststoffgegenstands 10 gewährleistet, insbesondere lassen sich so über den ganzen Umfang des hohlen Kunststoffgegenstands 10 gewünschtenfalls gleiche Wandstärken realisieren.

Beim Ausführungsbeispiel der Fig. 6 sind die beiden berührungslosen Kernhalter 26 und 27 sowie die Form 13 einem Schlitten 30 zugeordnet, der wie beim Ausführungsbeispiel der Fig. 1 bis 5 gegenüber dem Maschinengestell 24 in Herstellungsrichtung 17 und gegen die Herstellungsrichtung 17 verfahrbar ist.

In Herstellungsrichtung 17 folgt auf den hinter der Form 13 angeordneten Kernhalter 27 vorzugsweise mit etwas Abstand ein Greifer 31, der den ausgehärteten hohlen Kunststoffgegenstand 10 beim Zurückbewegen des Schlittens 30 mit der Form 13, dem Kern 14 und den Kernhaltern 26 und 27 gegen die Herstellungsrichtung 17 festhält, so dass dabei der Kunststoffgegenstand 10 durch die Form 13 und über den Kern 14 gezogen und so abschnittsweise entformt wird.

In Herstellungsrichtung 17 folgt auf den Greifer 31 wie beim Ausführungsbeispiel der Fig. 1 bis 5 die Trenneinrichtung 22. Eine Abzugseinrichtung kann bei diesem Ausführungsbeispiel entfallen, weil die Trenneinrichtung 22 einen Abschnitt vom Kunststoffgegenstand 10 hinter dem sich hinter der Form 13 befindenden Kernhalter 27 und auch hinter dem hinteren Ende 29 des Kerns 14 abtrennt. Denkbar ist es aber auch bei der in der Fig.6 gezeigten Vorrichtung, eine Abzugseinrichtung 23 vorzusehen.

Das Verfahren zur Herstellung des hohlen Kunststoffgegenstands 10 läuft bei der in der Fig. 6 gezeigten Vorrichtung prinzipiell genauso ab wie bei der Vorrichtung der Fig. 1 bis 5, so dass auf das in diesem Zusammenhang beschriebene Verfahren Bezug genommen wird.

Ein weiteres nicht gezeigtes (drittes) Ausführungsbeispiel der Erfindung sieht es vor, von einem Greifer den Kunststoffgegenstand vorzugsweise kontinuierlich durch die Form und über den Kern zu ziehen.

Bei einer Vorrichtung, bei der der Greifer den hergestellten hohlen Kunststoffgegenstand durch die Form und über den Kern zieht, sind die Form und der Kern einschließlich des mindestens einen Kernhalters fest am Maschinengestell gelagert. Die Form, der Kern und der mindestens eine Kernhalter sind bei dieser Vorrichtung folglich nicht in Herstellungsrichtung hin- und herbewegbar. Statt dessen ist bei dieser Vorrichtung mindestens der eine Greifer einem Schlitten zugeordnet und vom Schlitten relativ zum Maschinengestell in entgegengesetzten Richtungen verfahrbar.

Wird der Greifer in Herstellungsrichtung vorbewegt, wird der Kunststoffgegenstand vom Greifer durch die Form und über den Kern gezogen.

Wenn der mindestens eine Greifer das Ende seines Verfahrwegs längs des Maschinengestells erreicht hat, lässt er den Kunststoffgegenstand los und fährt leer zurück vor die Form. Von dieser Ausgangsstellung wird der Greifer wieder in Herstellungsrichtung vom Schlitten gegenüber dem Maschinengestell verfahren, wobei er kontinuierlich den Kunststoffgegenstand durch die Form und über den Kern zieht.

Hinter der Form kann feststehend eine Kühleinrichtung angeordnet sein. Es ist dann denkbar, die Kühleinrichtung mit dem mindestens einen Greifer auf dem Schlitten zu verfahren. Gleiches gilt für eine beispielsweise als eine Säge ausgebildete Trenneinrichtung. Diese hinter dem Greifer angeordnete Trenneinrichtung kann mit dem Greifer verfahrbar sein, aber auch ortsfest sich vor dem feststehend am Maschinengestell montierten Kernhalter befinden. Gleichermaßen kann in Herstellungsrichtung auf die Trenneinrichtung eine Abzugseinrichtung folgen.

Das Verfahren läuft bei der zuvor beschriebenen Vorrichtung so ab, dass der Kern entweder nur am sich hinter der Form befindlichen hinteren Ende mechanisch durch einen Kernhalter gehalten wird, so dass das sich vor der Form befindliche vordere Ende frei ist und auf dieses eine als Verstärkungsschlauch ausgebildete Querverstärkung aufgeschoben werden kann oder der Kern von mindestens einem berührungslosen Kernhalter insbesondere durch wenigstens ein Magnetfeld gehalten wird.

Der Kunststoffgegenstand wird von mindestens einem sich hinter der Form befindlichen Greifer kontinuierlich durch die Form und über den Kern gezogen. Dabei wird der Greifer vom ihn tragenden Schlitten auf dem Maschinengestell in Herstellungsrichtung verfahren. Im Gegensatz zum zuvor beschriebenen Verfahren wird bei diesem Verfahren der hohle Kunststoffgegenstand nicht taktweise oder in aufeinanderfolgenden Schritten gebildet, sondern kontinuierlich, bis der Greifer mit dem Schlitten am Ende des Verfahrwegs auf dem Maschinengestell angelangt ist.

Beim kontinuierlich vom Greifer durch die Form und über den Kern gezogenen hohlen Kunststoffgegenstand bleiben die Form und der Kern ebenso wie der jeweilige Kernhalter ortsfest, werden also nicht vom Schlitten verfahren. Dazu können die Form und der Kern mit dem Kernhalter fest mit dem Maschinengestell verbunden sein.

Wenn der Greifer mit dem Schlitten das Ende des Verfahrwegs auf dem Maschinengestell erreicht haben, wird der Greifer kurzfristig vom Kunststoffprofil gelöst und gegen die Herstellungsrichtung zurückgefahren, und zwar so weit, dass sich der Greifer mit geringstmöglichem Abstand hinter der Form befindet. Während des Zurückfahrens des vom hohlen Kunststoffgegenstand gelösten Greifers bleibt der Kunststoffgegenstand zusammen mit der Form und dem Kern stillstehen.

Auch bei diesem Verfahren können praktisch endlos lange hohle Kunststoffgegenstände, insbesondere geschlossene, rohrartige Kunststoffprofile, hergestellt werden. Wenn jedoch Abschnitte von Kunststoffgegenständen mit bestimmten Längen gewünscht sind, kann vorzugsweise nach dem Heranfahren des Greifers an die Form von der Trenneinrichtung der in Herstellungsrichtung auf den Greifer folgende (hinter dem Greifer liegende) Kunststoffgegenstand abgetrennt werden. Der abgetrennte Abschnitt des Kunststoffgegenstands kann dann gegebenenfalls durch eine Abzugseinrichtung wie beim zuvor beschriebenen Verfahren abtransportiert werden, und zwar gegebenenfalls durch den dazu geöffneten mechanischen Kernhalter am hinteren Ende des Kerns hindurch.

### Bezugszeichenliste

- 10: Kunststoffgegenstand
- 11: Querverstärkung
- 12: Längsverstärkung
- 13: Form
- 14: Kern
- 15: vorderes Ende
- 16: hinteres Ende
- 17: Herstellungsrichtung
- 18: Formgebungsbereich
- 19: Kernhalter
- 20: Greifer
- 21: Kühleinrichtung
- 22: Trenneinrichtung
- 23: Abzugseinrichtung
- 24: Maschinengestell
- 25: Schlitten
- 26: Kernhalter
- 27: Kernhalter
- 28: vorderes Ende
- 29: hinteres Ende
- 30: Schlitten
- 31: Greifer

## Patentansprüche

1. Verfahren zur Herstellung eines mindestens eine Querverstärkung (11) aufweisenden hohlen Kunststoffgegenstands (10), wobei der Kunststoffgegenstand (10) von einer Form (13) und einem Kern (14) gebildet wird und die Querverstärkung (11) über den Kern (14) geführt wird, **dadurch gekennzeichnet, dass** die Form (13) und der Kern (14) gemeinsam periodisch relativ zum herzustellenden hohlen Kunststoffgegenstand (10) bewegt werden.

2. Verfahren nach Anspruch 1, **dadurch gekennzeichnet, dass** die Form (13) und der Kern (14) gemeinsam schrittweise vor- und zurückbewegt werden, und/oder die Form (13) und der Kern (14) gemeinsam mit dem Kunststoffgegenstand (10) in Herstellungsrichtung (17) vorbewegt werden.

3. Verfahren nach Anspruch 1 oder 2, **dadurch gekennzeichnet, dass** die Form (13) und der Kern (14) beim Zurückbewegen gegen die Herstellungsrichtung (17) relativ zum dabei stillstehenden Kunststoffgegenstand (10) bewegt werden.

4. Verfahren nach einem der vorhergehenden Ansprüche, **dadurch gekennzeichnet, dass** der Kern (14) mindestens an seinem in Herstellungsrichtung vorauseilenden und in Herstellungsrichtung (17) hinter der Form (13) liegenden hinteren Ende (16, 29) gehalten wird.

5. Verfahren nach einem der vorhergehenden Ansprüche, **dadurch gekennzeichnet, dass** der Kunststoffgegenstand (10) beim Zurückbewegen der Form (13) und des Kerns (14) gegen die Herstellungsrichtung (17) festgehalten wird, vorzugsweise an einem in Herstellungsrichtung (17) gesehen hinter der Form (13) liegenden hinteren Endbereich.

6. Verfahren nach einem der vorhergehenden Ansprüche, **dadurch gekennzeichnet, dass** der Kern (14) mindestens an einem in Herstellungsrichtung (17) gesehen hinter der Form (13) sich befindenden Endbereich gehalten wird.

7. Verfahren nach Anspruch 6, **dadurch gekennzeichnet, dass** der Kern (14) an seinem Endbereich hinter der Form (13) durch mindestens einen Kernhalter (19) mechanisch gehalten wird, wobei vorzugsweise der mechanische Kernhalter (19) vom Kern (14) gelöst werden kann.

8. Verfahren nach Anspruch 6 oder 7, **dadurch gekennzeichnet, dass** der Kern (14) von mindestens einem Kernhalter (27) hinter der Form (13) berührungslos, vorzugsweise magnetisch, gehalten wird, insbesondere der Kern (14) von einem zweiten Kernhalter (26) vor der Form (13) berührungslos, vorzugsweise ebenfalls magnetisch, gehalten wird.

9. Verfahren nach einem der vorhergehenden Ansprüche, **dadurch gekennzeichnet, dass** der Kunststoffgegenstand (10) von einem hinter dem in Herstellungsrichtung (17) auf die Form (13) folgenden Greifer (20, 31) zeitweise bzw. periodisch gehalten wird.

10. Verfahren nach einem der vorhergehenden Ansprüche, **dadurch gekennzeichnet, dass** der Kunststoffgegenstand (10) hinter der Form (13) von mindestens einem verfahrbaren Greifer durch die Form (13) über den Kern (14) gezogen wird, insbesondere vom mindestens einen verfahrbaren Greifer der Kunststoffgegenstand (10) kontinuierlich über den Kern (14) und durch die Form (13) gezogen wird, wobei die Form (13) und der Kern (14) vorzugsweise stillstehen.

11. Vorrichtung zur Herstellung eines mindestens eine Querverstärkung (11) aufweisenden hohlen Kunststoffgegenstands (10) mit einer Form (13) und einem durch die Form (13) verlaufenden Kern (14), **dadurch gekennzeichnet, dass** die Form (13) und der Kern (14) oder mindestens ein Greifer (20; 31) für den Kunststoffgegenstand (10) einem gemeinsamen, verfahrbaren Schlitten (25, 30) zugeordnet sind.

12. Vorrichtung nach Anspruch 11, **dadurch gekennzeichnet, dass** dem verfahrbaren Schlitten (25, 30) mindestens ein Kernhalter (19; 26, 27) zugeordnet ist.

13. Vorrichtung nach Anspruch 12 oder 13, **dadurch gekennzeichnet, dass** der Schlitten (25, 30) in und gegen die Herstellungsrichtung (17) des Kunststoffgegenstands (10) verfahrbar ist.

14. Vorrichtung nach einem der Ansprüche 11 bis 13, **dadurch gekennzeichnet, dass** der Kern von mindestens einem in Herstellungsrichtung (17) gesehen hinter der Form (13) liegenden Kernhalter (19, 27) festhaltbar ist.

15. Vorrichtung nach einem der Ansprüche 11 bis 14, **dadurch gekennzeichnet, dass** der mindestens eine Kernhalter (19; 26, 27) zum mechanischen oder berührungslosen, vorzugsweise magnetischen, Halten des Kerns (14) ausgebildet ist.

## Claims

1. Method for producing a hollow plastic object (10) having at least one transverse reinforcement (11), wherein the plastic object (10) is formed by a mold (13) and a core (14), and the transverse reinforcement (11) is guided over the core (14), **characterized in that** the mold (13) and the core (14) are collectively moved in a periodic manner in relation to the hollow plastic object (10) to be produced.

2. Method according to Claim 1, **characterized in that** the mold (13) and the core (14) are collectively moved back and forth in an intermittent manner and/or the mold (13) and the core (14) with the plastic object (10) are collectively moved forward in the production direction (17).

3. Method according to Claim 1 or 2, **characterized in that** the mold (13) and the core (14), when being moved back, are moved counter to the production direction (17) in relation to the plastic object (10) which herein is stationary.

4. Method according to one of the preceding claims, **characterized in that** the core (14) is held at least on the rear end (16, 29) thereof which is leading when viewed in the production direction and which lies behind the mold (13) when viewed in the production direction (17).

5. Method according to one of the preceding claims, **characterized in that** the plastic object (10) is retained, preferably on a rear end region which lies behind the mold (13) when viewed in the production direction (17), when the mold (13) and the core (14) are being moved back counter to the production direction (17).

6. Method according to one of the preceding claims, **characterized in that** the core (14) is held at least on one end region which is behind the mold (13) when viewed in the production direction (17).

7. Method according to Claim 6, **characterized in that** the core (14) on its end region behind the mold (13) is mechanically held by at least one core holder (19), wherein the mechanical core holder (19) preferably can be released from the core (14).

8. Method according to Claim 6 or 7, **characterized in that** the core (14) is held in a non-contacting manner, preferably in a magnetic manner, behind the mold (13) by at least one core holder (27), in particular that the core (14) is held in a non-contacting manner, preferably likewise in a magnetic manner, in front of the mold (13) by a second core holder (26).

9. Method according to one of the preceding claims, **characterized in that** the plastic object (10) is occasionally or periodically held by a gripper (20, 31) behind the downstream of the mold (13) when viewed in the production direction (17).

10. Method according to one of the preceding claims, **characterized in that** the plastic object (10) behind the mold (13) is pulled through the mold (13) over the core (14) by at least one displaceable gripper, in particular that the plastic object (10) is continuously pulled over the core (14) and through the mold (13) in particular by the at least one displaceable gripper, wherein the mold (13) and the core (14) are preferably stationary.

11. Device for producing a hollow plastic object (10) having at least one transverse reinforcement (11) and having a mold (13) and a core (14) which runs through the mold (13), **characterized in that** the mold (13) and the core (14) or at least one gripper (20; 31) for the plastic object (10) are assigned to a common displaceable slide (25, 30).

12. Device according to Claim 11, **characterized in that** the displaceable slide (25, 30) is assigned at least one core holder (19; 26, 27).

13. Device according to Claim 12 or 13, **characterized in that** the slide (25, 30) is displaceable in and counter to the production direction (17) of the plastic object (10).

14. Device according to one of Claims 11 to 13, **characterized in that** the core is retainable by at least one core holder (19, 27) which lies behind the mold (13) when viewed in the production direction (17).

15. Device according to one of Claims 11 to 14, **characterized in that** the at least one core holder (19; 26, 27) is configured for holding the core (14) in a mechanical or non-contacting manner, preferably a magnetic manner.

## Revendications

1. Procédé de fabrication d'un objet creux (10) en matière synthétique présentant au moins un renfort transversal (11), l'objet (10) en matière synthétique étant formé d'un moule (13) et d'une âme (14) et le renfort transversal (11) traversant l'âme (14), **caractérisé en ce que**
le moule (13) et l'âme (14) sont déplacés périodiquement et conjointement par rapport à l'objet creux (10) en matière synthétique à fabriquer.

2. Procédé selon la revendication 1, **caractérisé en ce que** le moule (13) et l'âme (14) sont déplacés ensemble, pas-à-pas et en va-et-vient et/ou **en ce que** le moule (13) et l'âme (14) sont déplacés conjointement avec l'objet (10) en matière synthétique dans la direction de fabrication (17).

3. Procédé selon les revendications 1 ou 2, **caractérisé en ce que** le moule (13) et l'âme (14) sont déplacés par rapport à l'objet (10) en matière synthétique immobile lors d'un déplacement en arrière dans la direction opposée à la direction de fabrication (17).

4. Procédé selon l'une des revendications précédentes, **caractérisé en ce que** l'âme (14) est maintenue en avant dans la direction de fabrication au moins par son extrémité arrière (16, 29) située derrière le moule (13) dans la direction de fabrication (17).

5. Procédé selon l'une des revendications précédentes, **caractérisé en ce que** lors du déplacement de recul du moule (13) et de l'âme (14) dans la direction opposée à la direction de fabrication (17), l'objet (10) en matière synthétique est maintenu de préférence par une partie d'extrémité arrière située derrière le moule (13) dans la direction de fabrication (17).

6. Procédé selon l'une des revendications précédentes, **caractérisé en ce que** l'âme (14) est maintenue au moins sur une partie d'extrémité située derrière le moule (13) dans la direction de fabrication (17).

7. Procédé selon la revendication 6, **caractérisé en ce que** l'âme (14) est maintenue mécaniquement par sa partie d'extrémité derrière le moule (13) par au moins un support d'âme (19), le support mécanique d'âme (19) pouvant de préférence être détaché de l'âme (14).

8. Procédé selon les revendications 6 ou 7, **caractérisé en ce que** l'âme (14) est maintenue derrière le moule (13) sans contact, de préférence magnétiquement, par au moins un support d'âme (27), et en particulier **en ce que** l'âme (14) est maintenue sans contact, et de préférence également magnétiquement, par un deuxième support d'âme (26) situé en avant du moule (13).

9. Procédé selon l'une des revendications précédentes, **caractérisé en ce que** l'objet (10) en matière synthétique est maintenu une partie du temps ou périodiquement par une pince (20, 31) derrière le qui suit le moule (13) dans la direction de fabrication (17).

10. Procédé selon l'une des revendications précédentes, **caractérisé en ce que** l'objet (10) en matière synthétique est tiré à travers le moule (13) au-dessus de l'âme (14) derrière le moule (13) par au moins une pince mobile, et en particulier l'objet (10) en matière synthétique est tiré de manière continue au-dessus de l'âme (14) et à travers le moule (13) par au moins une pince mobile, le moule (13) et l'âme (14) étant de préférence immobiles.

11. Ensemble de fabrication d'un objet creux (10) en matière synthétique présentant au moins un renfort transversal (11), l'ensemble présentant un moule (13) et une âme (14) qui traverse le moule (13), **caractérisé en ce que**
le moule (13) et l'âme (14) ou au moins une pince (20; 31) prévue pour l'objet (10) en matière synthétique sont associés à un chariot mobile commun (25, 30).

12. Ensemble selon la revendication 11, **caractérisé en ce qu'**au moins un support d'âme (19; 26, 27) est associé au chariot mobile (25, 30).

13. Ensemble selon les revendications 12 ou 13, **caractérisé en ce que** le chariot (25, 30) peut être déplacé dans la direction de fabrication (17) de l'objet (10) en matière synthétique et dans la direction opposée.

14. Ensemble selon l'une des revendications 11 à 13, **caractérisé en ce que** l'âme peut être immobilisée par un support d'âme (19, 27) situé derrière le moule (13) dans la direction de fabrication (17).

15. Ensemble selon l'une des revendications 11 à 14, **caractérisé en ce que** le ou les supports d'âme (19; 26, 27) sont configurés pour maintenir l'âme (14) mécaniquement ou sans contact, de préférence magnétiquement.
